# EUROPÄISCHE PATENTSCHRIFT

(11) **EP 0 700 541 B1**
(45) Veröffentlichungstag und Bekanntmachung des Hinweises auf die Patenterteilung: **14.02.2001**
(21) Anmeldenummer: 94917669.7
(22) Anmeldetag: 26.05.1994
(51) Int. Cl.: G06F 13/364

(54) **VERFAHREN ZUM BETREIBEN EINES BUSSYSTEMS**
PROCESS FOR OPERATING A BUS SYSTEM
PROCEDE PERMETTANT DE FAIRE FONCTIONNER UN SYSTEME BUS

(30) Priorität: 26.05.1993 DE 4317567
(43) Veröffentlichungstag der Anmeldung: 13.03.1996
(73) Patentinhaber: Infineon Technologies AG, 81541 München (DE); ARM Limited, Cherry Hinton, Cambridge CB1 4JN (GB); Koninklijke Philips Electronics N.V., 5621 BA Eindhoven (NL); INMOS LIMITED, Bristol BS12 4SQ (GB); MHS, 44087 Nantes Cédex 03 (FR)
(72) Erfinder: NIEDERMEIER, Thomas, D-83024 Rosenheim (DE); ROHM, Peter, D-85276 Pfaffenhofen/Ilm (DE); SCHMID, Richard, D-81476 München (DE); FLYNN, David, Trumpington, Cambridge CB2 2NJ (GB); KLAPPROTH, Peter, NL-5644 JE Eindhoven (NL); ZANDVELD, Frederik, NL-5571 CL Bergeyk (NL); KOOT, Jacobus, Christophorus, NL-5644 TS Eindhoven (NL); JONES, Andrew Michael, Clifton, Bristol BS8 2AH (GB); MATTHEW, James Graham, Swindon, Wiltshire SN6 6QS (GB); DOUADY, Bruno, F-75006 Paris (FR)
(74) Vertreter: Zedlitz, Peter, Dipl.-Inf.
(86) Internationale Anmeldenummer: EP9401711
(87) Internationale Veröffentlichungsnummer: WO9428487

(56) Entgegenhaltungen:
- EP-A- 0 444 711
- EP-A- 0 507 954
- US-A- 4 481 580
- US-A- 4 818 985
- US-A- 5 127 089

## Beschreibung

Die Erfindung betrifft ein Verfahren zum Betreiben eines Bussystems gemäß dem Oberbegriff des Pantentanspruchs 1.

Ein Verfahren dieser Art ist aus der US-A-4 818 985 bekannt.

Weitere Verfahren zum Betreiben von Bussystemen sind aus der EP-A-0 444 711 bekannt.

Nachteilig an diesen und anderen Verfahren ist, daß die über das Bussystem verbundenen Einrichtungen bisweilen nicht so schnell und effizient arbeiten können wie es eigentlich möglichwäre.

Aufgabe der Erfindung ist es, ein Verfahren zum Betreiben eines Busses anzugeben, das möglichst flexibel und schnell eine Datenübertragung zwischen an dem Bus angeschlossenen Einheiten ermöglicht.

Diese Aufgabe wird durch den kennzeichnenden Teil des Anspruchs 1 gelöst. Weiterbildungen sind Kennzeichen der Unteransprüche.

Die Erfindung wird nachfolgend anhand von zwei Figuren näher erläutert. Es zeigen
- Figur 1: ein prinzipielles Blockschaltbild einer erfindungsgemäßen Anordnung,
- Figur 2: einen zeitlichen Verlauf verschiedener Signale des erfindungsgemäßen Bussystems.

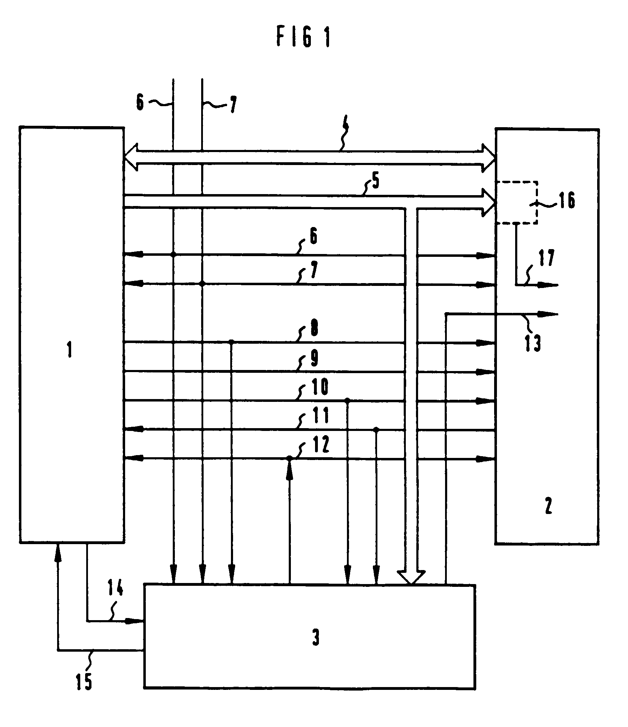

In Figur 1 ist beispielsweise ein Bussystem gemäß der vorliegenden Erfindung mit einer Master-Einheit 1, z. B. einer zentralen Recheneinheit wie z.B. einem Riscprozessor dargestellt. Dieser kommuniziert über einen Datenbus 4, welcher bidirektional betrieben wird, und über einen unidirektionalen Adreßbus 5 sowie weiteren Steuerleitungen 6...15, welche ebenfalls unidirektional sind, z. B. mit weiteren Mastereinheiten oder Slaveeinheiten 2. Die Anzahl von Master- und Slave-Einheiten ist systemabhängig und nicht definiert. Eine Bussteuereinheit 3 steuert über die Leitungen 14 und 15 die Zuteilung des Busses (Arbitrierung). Dazu ist die Bussteuereinheit 3 mit jeder Master-Einheit 1 über ein Signalpaar 14/15 verbunden. Der Bussteuereinheit 3 werden außerdem der Adreßbus 5 sowie die Steuersignale 6, 7, 8, 10 und 11 zugeführt. Der Bus kann von der Steuereinheit 3 zu einer Taktperiode der Taktsignalleitung 6 immer nur einer Master-Einheit zugeteilt sein. Über das Signal 12 kann die Bussteuereinheit 3, falls eine für das System unzulässig lange, durch eine Slave-Einheit 2 verursachte, Belegung des Busses auftritt, Slave- und Master-Einheit vom Bus abschalten. Die die Abschaltung bestimmende Zeit der Busbelegung (Anzahl von Taktzyklen) kann in der Bussteuereinheit fest oder variabel definiert sein.

In der vorliegenden Figur 1 ist an diesem Bus beispielsweise eine Peripherieeinheit 2 angeschlossen. Selbstverständlich können an diesen Bus eine Vielzahl von Peripherieeinheiten angeschlossen werden. Eine Peripherieeinheit kann entweder eine Master-Peripherieeinheit sein oder eine Slave-Peripherieeinheit.

Mit 7 ist eine Reset-Leitung bezeichnet, welche mit allen am Bus angeschlossenen Einheiten verbunden ist. Mit 8 ist eine Signalleitung bezeichnet, die anzeigt, ob eine Mastereinheit aufeinanderfolgende Zyklen ausführt. Mit 9 ist eine Schreib-Leseleitung bezeichnet. Die mit 10 bezeichnete Leitung kann aus mehreren Leitungen bestehen, z. B. aus vier Einzelleitungen, welche zur codierten Übertragung weiterer Eigenschaften eines Bus-Zyklusses dienen.

Über die ebenfalls aus mehreren Leitungen, z. B. aus 3 Leitungen, bestehende Steuerbus 11 kann eine Slaveeinheit 2 anzeigen, daß gültige Signale auf dem Datenbus 4 anliegen oder von einer Slaveeinheit 2 erkannt werden. Eine Leitung 13 dient zur Selektierung einer Slaveeinheit 2.

Es folgt eine genauere Beschreibung der Bussignale:

Signale der Bussteuereinheit 3:
- Signal 14:: Bus Request; mit diesem Signal fordert eine Master-Einheit 1 den Bus für eine Datenübertragung mit einer Slave-Einheit 2 an.
- Signal 15:: Bus Grant; mit diesem Signal gibt die Bussteuereinheit 3 der Master-Einheit 1 bekannt, wann diese auf dem Bus mit der Datenübertragung beginnen kann.
- Signal 12:: Timeout; über dieses Signal bricht die Bussteuereinheit 3 eine Datenübertragung zwischen Master- 1 und Slave-Einheit 2 ab. Wird dieses Signal aktiv, müssen Master- 1 und Slave-Einheit 2 ihre aktiv treibenden Signalleitungen abschalten.
- Signal 13:: Unit Select; dieser Signaleingang ist von jeder als Slave-Einheit 2 ansprechbaren Einheit am Bus zu deren Auswahl bei einer Datenübertragung zu Vergügung zu stellen.
Signale einer Master-Einheit 1:
- Signal 5:: Adressbus z. B. A31 - A2; die Adressleitungen werden von der an einer Datenübertragung beteiligten Master-Einheit 1 getrieben.
- Signal 8:: Lock; mit diesem Signal kann eine Master-Einheit 1 aufeinanderfolgende Bus Zyklen ohne Unterbrechung der Datenübertragung durch eine andere Master-Einheit 1 durchführen.
- Signal 9:: Read/Write; mit diesem Signal zeigt eine Master-Einheit 1 zu Beginn des Bus-Zyklusses der über Signal 13 ausgewählten Slave-Einheit 2 an, ob in einem Bus-Zyklus Daten von oder zu dieser Slave-Einheit 2 übertragen werden.
- Signale 10:: Operation Code; mit diesen Signalen werden von der Master-Einheit 1, zusätzlich zu den Signalen 8 und.9, weitere Eigenschaften eines Bus-Zyklusses codiert übertragen. Solche Eigenschaften sind z. B. Größe der übertragenen Dateneinheit (8-/16-/32-Bit), Zugriff auf Daten- oder Steuerbereich, Warte Zyklus.
Signale einer Slave-Einheit 2:
- Signale 11:: Acknowledge Code; diese kodierten Signale werden von den Slave-Einheiten 2 generiert. Die Slave-Einheiten 2 zeigen über diese Signale z. B. an, ob Daten bereit stehen, ob Daten verarbeitet wurden, ob Warte-Zyklen eingefügt werden und ob Fehlerzustände beim aktuellen Bus-Zyklus aufgetreten sind oder nicht.
Sonstige Signale:
- Signal 4:: Datenbus D31-D0; dies ist der bidirektionale Datenbus, über welchen z. B. 8-/16- oder 32-Bit breite Daten übertragen werden.
- Signal 16:: Clock; dieses Signal ist das Taktsignal für den Bus, welches zur Zeitsteuerung der Signalabläufe benutzt wird.
- Signal 17:: Reset; dieses Signal ist ein Rücksetzsignal für Bus, welches asynchron aktiv werden kann und synchron inaktiv wird.

Eine Datenübertragung auf dem Datenbus 4 erfolgt immer zwischen einer Master- 1 und einer Slave-Einheit 2. Nach Zuteilung des Busses durch die Bussteuereinheit 3 wählt die Master-Einheit 1 die zur Datenübertragung benötigte Slave-Einheit 2 über eine Adresse, welche auf dem Adressbus 5 übertragen wird, aus. Die Dekodierung dieser Adresse kann zentral in der Bussteuereinheit 3 oder dezentral in einem Dekoder 16 bei der Slave-Einheit 2 erfolgen. Jede als Slave-Einheit 2 adressierbare Einheit (d. h. möglicherweise auch eine Master-Einheit) muß dazu ein Eingangssignal 13 vorsehen. Eine Slave-Einheit 2 mit Dekoder 16 kann dann ein zusatzliches Signal 17 zur Selektierung der jeweiligen Slave-Einheit 2 aufweisen.

Master- 1 und Slave-Einheit 2 kommunizieren miteinander über die Steuersignale 8, 9, 10, den Adressbus 5 (vom Master zum Slave) sowie über die Steuersignale 11 (vom Slave zum Master).

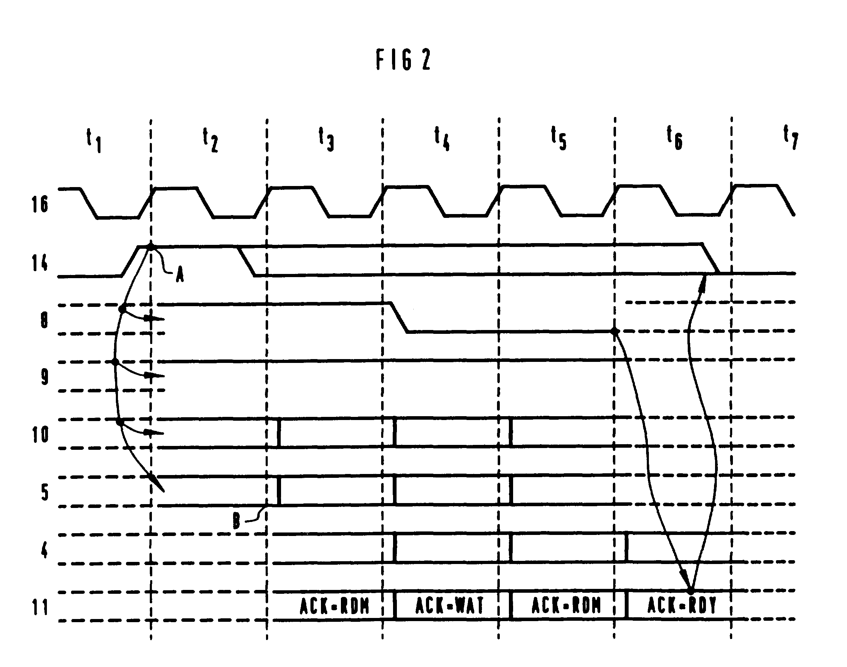

In Figur 2 wird der Verlauf verschiedener Signale dargestellt. Die Numerierung der Signale entspricht der in Figur 1 definierten Nummern.

Figur 2 zeigt die Übertragung von 3 zusammenhängenden Dateneinheiten (32-Bit) von einer Slave-Einheit 2 zu einer Master-Einheit 1. Als Referenz für das Timing auf dem Bus dient das Taktsignal 16. Vor und nach einer Datenübertragung auf dem Bus (t1 und t7) befindet sich der Bus in einem Wartezustand. Bei A weist die Bussteuereinheit 3 der Master-Einheit 1 den Bus zu. Diese beginnt mit der Datenübertragung und treibt die Signale 8, 9, 10 und den Adressbus 5. Während t2 wird die Adressinformation auf dem Adressbus 5 zentral oder dezentral dekodiert und zum Zeitpunkt B als Auswahlsignal in der Slave-Einheit zwischengespeichert. Die Signale 9 und 10, welche weitere Informationen über den begonnen Bus-Zyklus enthalten (schreiben oder lesen, Quantität der Daten), werden ebenfalls in der ausgewählten Slave-Einheit zwischengespeichert. Das Signal 8 zeigt der Bussteuereinheit am Ende von t2 an, daß noch ein weiterer Bus-Zyklus folgt und der Bus nicht für eine neue Master-Einheit freigegeben werden kann.

Mit Beginn von t3 beginnt die Slave-Einheit 2 (da Lesevorgang) den Datenbus 4 und die Signale 11 zu treiben. Die Kombination der Signale 11 (RDM = Ready, noch mehr Daten folgen) in t3 zeigt an, daß die Daten des 1. Lesezyklusses zur Verfügung stehen und von der Master-Einheit 1 übernommen werden können. Parallel zu den Daten des 1. Lesezyklusses gibt die Master-Einheit 1 in t3 die Adresse und die Signale 8, 9 und 10 des 2. Lesezyklusses aus (Pipelining). Mit t4 wird die Adresse und die Signale 8, 9 und 10 des 3ten Lesezyklusses ausgegeben. Signal 8 gibt an, daß nach dem 3ten Lesezyklus die Datenübertragung zwischen Master- 1 und Slave-Einheit 2 beendet ist. Da für die Daten des 2. Lesezyklusses, gesteuert über die Signale 11, ein Wartezyklus benötigt wird (WAT=Wait, Daten noch nicht verfügbar), können die Signale 8, 9, 10 und die Adresse 5 erst am Ende von t5 bewertet werden.

Mit gültigen Daten in t5 und dem Pegel von Signal 8 am Ende von t5 hört die Master-Einheit 1 auf die Bussignale 8, 9, 10 und den Adressbus 5 zu treiben. Die Slave-Einheit 2 treibt den Datenbus 4 und die Signale 11 solange, bis gültige Daten über die Signale 11 angezeigt werden. In Figur 2 ist dies am Ende von t6 der Fall (ACK = Ready, Buszyklus beendet). Am Ende von t6 kann außerdem die Bussteuereinheit 3 entscheiden ob, wenn eine entsprechende Anforderung vorliegt (was für Figur 2 nicht zutrift), eine andere Master-Einheit 1 den Bus zugeteilt bekommt. Somit könnte frühestens in t7 eine andere Master-Einheit 1 die Signale 8, 9, 10 und 5 zu treiben beginnen'womit auch erst im Buszyklus nach t7 eine Slave-Einheit 2 wieder die Signale 4 und 11 treiben kann. Dadurch wird das gleichzeitig aktive Treiben von Bus-Signalleitungen (Signal Konflikt) vermieden.

## Patentansprüche

1. Verfahren zum Betreiben eines Bussystems
- mit wenigstens einer Master-Einheit (1), die über einen Bus (4-12) mit wenigstens einer Slave-Einheit (2) unter Steuerung durch eine Bus-Steuereinheit (3) kommuniziert,
- wobei die Bus-Steuereinheit (3) die Zuteilung des Busses (4-12) an eine Master-Einheit (1) steuert, und
- wobei die Datenübertragung zwischen der ausgewählten Master-Einheit (1) und einer adressierten Slave-Einheit (2) unter Steuerung der Master-Einheit (1) und der adressierten Slave-Einheit (2) erfolgt,
**dadurch gekennzeichnet,**
daß über wenigstens eine Steuerleitung (10, 11) des Busses (4-12) in codierter Form Angaben und/oder Festlegungen bestimmter Buszyklus-Eigenschaften übertragen werden,
daß die Angaben und/oder Festlegungen der bestimmten Buszyklus-Eigenschaften eine Bestimmung einer Anzahl von Wartezyklen umfassen, und
daß die die Anzahl von Wartezyklen betreffenden Angaben und Festlegungen von der ausgewähten Master-Einheit (1) an die adressierte Slave-Einheit (2) übertragen werden.

2. Verfahren nach Anspruch 1,
**dadurch gekennzeichnet,**
daß eine Master-Einheit Mittel zur zeitlichen Steuerung der Datenübertragung aufweist.

3. Verfahren nach Anspruch 1 oder 2,
**dadurch gekennzeichnet,**
daß die Angaben und/oder Festlegungen der bestimmten Buszyklus-Eigenschaften eine Bestimmung der Größe der über einen Datenbus (4) übertragenen Dateneinheit umfassen.

4. Verfahren nach Anspruch 3,
**dadurch gekennzeichnet,**
daß die Größe der Dateneinheit so festlegbar ist, daß die Breite der Daten geringer ist als die Breite des Datenbusses (4).

5. Verfahren nach einem der vorhergehenden Ansprüche,
**dadurch gekennzeichnet**,
daß die Angaben und/oder Festlegungen der bestimmten Buszyklus-Eigenschaften eine Bestimmung des Bereiches umfaßt, auf welchen zugegriffen werden soll.

6. Verfahren nach einem der vorhergehenden Ansprüche,
**dadurch gekennzeichnet**,
daß von der adressierten Slave-Einheit (2) über die wenigstens eine Steuerleitung (11) Datenübertragungen quittiert werden.

7. Verfahren nach einem der vorhergehenden Ansprüche,
**dadurch gekennzeichnet**,
daß von der adressierten Slave-Einheit (2) über die wenigstens eine Steuerleitung (11) angezeigt wird, ob auf dem Bus (4) Daten zur Übernahme bereitstehen.

8. Verfahren nach einem der vorhergehenden Ansprüche,
**dadurch gekennzeichnet**,
daß von der adressierten Slave-Einheit (2) über die wenigstens eine Steuerleitung (11) angezeigt wird, ob Daten verarbeitet werden oder wurden.

9. Verfahren nach einem der vorhergehenden Ansprüche,
**dadurch gekennzeichnet,**
daß von der adressierten. Slave-Einheit (2) über die wenigstens eine Steuerleitung (11) angezeigt wird, ob Wartezyklen eingefügt werden.

10. Verfahren nach einem der vorhergehenden Ansprüche,
**dadurch gekennzeichnet,**
daß von der adressierten Slave-Einheit (2) über die wenigstens eine Steuerleitung (11) angezeigt wird, ob Fehlerzustände aufgetreten sind.

11. Verfahren nach einem der vorhergehenden Ansprüche,
**dadurch gekennzeichnet**,
daß die Master-Einheit (1) über eine Steuerleitung (8) anzeigen kann, ob aufeinanderfolgende Buszyklen ohne Unterbrechung durchgeführt werden oder nicht.

12. Verfahren nach einem der vorhergehenden Ansprüche,
**dadurch gekennzeichnet,**
daß die Bus-Steuereinheit (3) ein Signal erzeugen kann, auf das hin eine Datenübertragung nach einer vorbestimmten Zeit abgebrochen wird.

13. Verfahren nach Anspruch 12,
**dadurch gekennzeichnet**,
daß die vorbestimmte Zeit veränderbar ist.

14. Verfahren nach einem der vorhergehenden Ansprüche,
**dadurch gekennzeichnet**,
daß eine über den Bus (5) übertragene Adresse in der Bus-Steuereinheit (3) dekodiert wird, und daß dabei ein Selektiersignal (13) erzeugt wird, welches der durch die Adresse ausgewählten Slave-Einheit (2) zugeführt wird.

15. Verfahren nach einem der Ansprüche 1-13,
**dadurch gekennzeichnet**,
daß eine über den Bus (5) übertragene Adresse in den Slave-Einheiten (2) dekodiert wird, und daß dabei in der durch die Adresse ausgewählten Slave-Einheit (2) ein Selektiersignal (17) erzeugt wird.

## Claims

1. Method for operation of a bus system
- having at least one master unit (1) which communicates via a bus (4-12) with at least one slave unit (2), controlled by a bus control unit (3),
- with the bus control unit (3) controlling the assignment of the bus (4-12) to a master unit (1), and
- with the data transmission between the selected master unit (1) and an addressed slave unit (2) being carried out controlled by the master unit (1) and the addressed slave unit (2),
characterized
in that details and/or stipulations for specific bus cycle characteristics are transmitted in encoded form via at least one control line (10, 11) of the bus, in that the details and/or stipulations of the specific bus cycle characteristics comprise determining a number of waiting cycles, and
in that the details and stipulations which relate to the number of waiting cycles are transmitted by the selected master unit (1) to the addressed slave unit (2).

2. Method according to Claim 1,
characterized
in that a master unit has means for controlling the timing of the data transmission.

3. Method according to Claim 1 or 2,
characterized
in that the details and/or stipulations of the specific bus cycle characteristics comprise determining the size of the data unit transmitted via a data bus (4).

4. Method according to Claim 3,
characterized
in that the size of the data unit can be defined such that the width of the data is less than the width of the data bus (4).

5. Method according to one of the preceding claims,
characterized
in that the details and/or stipulations of the specific bus cycle characteristics comprise determining the area to which access is intended to be made.

6. Method according to one of the preceding claims,
characterized
in that data transmissions are acknowledged by the addressed slave unit (2) via the at least one control line (11).

7. Method according to one of the preceding claims,
characterized
in that the addressed slave unit (2) uses the at least one control line (11) to indicate whether data are ready to be transferred on the bus (4).

8. Method according to one of the preceding claims,
characterized
in that the addressed slave unit (2) uses the at least one control line (11) to indicate whether data are being or have been processed.

9. Method according to one of the preceding claims,
characterized
in that the addressed slave unit (2) uses the at least one control line (11) to indicate whether any waiting cycles have been introduced.

10. Method according to one of the preceding claims,
characterized
in that the addressed slave unit (2) uses the at least one control line (11) to indicate whether any fault states have occurred.

11. Method according to one of the preceding claims,
characterized
in that the master units (1) can indicate via a control line (8) whether successive bus cycles are or are not being carried out without interruption.

12. Method according to one of the preceding claims,
characterized
in that the bus control unit (3) can produce a signal in response to which a data transmission is terminated after a predetermined time.

13. Method according to Claim 12,
characterized
in that the predetermined time can be varied.

14. Method according to one of the preceding claims,
characterized
in that an address transmitted via the bus (5) is decoded in the bus control unit (3), and in that, in the process, a selection signal (13) is produced, which is supplied to the slave unit (2) selected by that address.

15. Method according to one of Claims 1-13,
characterized
in that an address transmitted via the bus (5) is decoded in the slave unit (2) and in that, in the process, a selection signal (17) is produced in the slave unit (2) selected by that address.

## Revendications

1. Procédé pour la mise en oeuvre d'un système de bus
- avec au moins une unité maître (1) qui communique avec au moins une unité esclave (2) par l'intermédiaire d'un bus (4 - 12) sous la commande d'une unité de commande de bus (3),
- l'unité de commande du bus (3) commandant l'affectation du bus (4- 12) à une unité maître (1) et
- la transmission de données entre l'unité maître (1) choisie et une unité esclave (2) adressée ayant lieu sous la commande de l'unité maître (1) et de l'unité esclave adressée (2)
**caractérisé par le fait**
que, par l'intermédiaire d'au moins une ligne de commande (10, 11) du bus (4 - 12), des données et/ou des conventions de propriétés déterminées du cycle de bus sont transmises sous forme codée,
que les données et/ou conventions de propriétés déterminées du cycle de bus comprennent une détermination d'un nombre de cycles d'attente et
que les données et conventions concernant le nombre de cycles d'attente sont transmises par l'unité maître (1) choisie à l'unité esclave (2) adressée.

2. Procédé selon la revendication 1
**caractérisé par le fait**
qu'une unité maître comporte des moyens pour la commande, en fonction du temps, de la transmission de données.

3. Procédé selon la revendication 1 ou 2
**caractérisé par le fait**
que les données et/ou conventions de propriétés déterminées du cycle de bus comprennent une détermination de la dimension de l'unité de données transmise sur le bus de données (4).

4. Procédé selon la revendication 3
**caractérisé par le fait**
que la dimension de l'unité de données peut être fixée de telle sorte que la largeur des données est inférieure à la largeur du bus de données (4).

5. Procédé selon l'une des revendications précédentes
**caractérisé par le fait**
que les données et/ou conventions de propriétés déterminées du cycle de bus comprennent une détermination de la plage sur laquelle il doit y avoir accès.

6. Procédé selon l'une des revendications précédentes
**caractérisé par le fait**
que, par l'intermédiaire d'au moins une ligne de commande (11), des transmissions de données sont acquittées par l'unité esclave (2) adressée.

7. Procédé selon l'une des revendications précédentes
**caractérisé par le fait**
que, par l'intermédiaire d'au moins une ligne de commande (11), l'unité esclave (2) adressée indique si des données sont prêtes à être prises en charge sur le bus (4).

8. Procédé selon l'une des revendications précédentes
**caractérisé par le fait**
que, par l'intermédiaire d'au moins une ligne de commande (11), l'unité esclave (2) adressée indique si des données sont ou ont été traitées.

9. Procédé selon l'une des revendications précédentes
**caractérisé par le fait**
que, par l'intermédiaire d'au moins une ligne de commande (11), l'unité esclave (2) adressée indique si des cycles d'attente ont été insérés.

10. Procédé selon l'une des revendications précédentes
**caractérisé par le fait**
que, par l'intermédiaire d'au moins une ligne de commande (11), l'unité esclave (2) adressée indique si des états d'erreur se sont présentés.

11. Procédé selon l'une des revendications précédentes
**caractérisé par le fait**
que, par l'intermédiaire d'une ligne de commande (8), l'unité maître (1) peut indiquer si des cycles de bus, qui se succèdent, peuvent être exécutés ou non sans interruption.

12. Procédé selon l'une des revendications précédentes
**caractérisé par le fait**
que l'unité de commande du bus (3) peut générer un signal à la suite duquel une transmission de données est interrompue au bout d'un temps déterminé.

13. Procédé selon la revendication 12
**caractérisé par le fait**
que le temps déterminé peut être modifié.

14. Procédé selon l'une des revendications précédentes
**caractérisé par le fait**
qu'une adresse transmise sur le bus (5) est décodée dans l'unité de commande du bus (3) et
que, en même temps, un signal de sélection (13) est généré, lequel est amené à l'unité esclave (2) choisie grâce à l'adresse.

15. Procédé selon l'une des revendications 1 à 13
**caractérisé par le fait**
qu'une adresse transmise sur le bus (5) est décodée dans les unités esclaves (2) et
que, en même temps, un signal de sélection (17) est généré dans l'unité esclave (2) choisie grâce à l'adresse.
